# EUROPEAN PATENT SPECIFICATION

(11) **EP 4 159 894 B1**
(45) Date of publication and mention of the grant of the patent: **08.05.2024**
(21) Application number: 21200112.7
(22) Date of filing: 30.09.2021
(51) Int. Cl.: C25B 1/042, C25B 9/17, C25B 15/00, C25B 15/08

(54) **STEAM ELECTROLYSER SYSTEM FOR THE PRODUCTION OF HYDROGEN AND CORRESPONDING METHOD**
DAMPFELEKTROLYSEURSYSTEM ZUR HERSTELLUNG VON WASSERSTOFF UND ENTSPRECHENDES VERFAHREN
SYSTÈME D'ÉLECTROLYSEUR DE VAPEUR POUR LA PRODUCTION D'HYDROGÈNE ET PROCÉDÉ CORRESPONDANT

(43) Date of publication of application: 05.04.2023
(73) Proprietor: SolydEra SA, 1400 Yverdon-les-Bains (CH)
(72) Inventor: BUCHELI, Olivier, 6043-Adligenswill (CH); DIETHELM, Stefan, 1680 Romont (CH); OUWELTJES, Jan Pieter, 1004 Lausanne (CH)
(74) Representative: Hepp Wenger Ryffel AG

(56) References cited:
- EP-A1- 2 648 314
- EP-A1- 3 168 330
- US-A1- 2007 119 718

## Description

The present invention relates to a steam electrolyser system for the production of hydrogen and a method for operating said steam electrolyser system.

An encouraging method for large-scale hydrogen production is high-temperature electrolysis by means of reactors that deploy steam electrolyser cells, such as solid-oxide electrolyser cells (SOE), or reactors that deploy reversible steam electrolyser cells, that can operate as electrolyser or fuel cell, such as reversible solid oxide cells (rSOC). High temperature electrolysis is more efficient than low-temperature electrolysis because part of the energy is supplied as heat, which is usually cheaper than electricity. This heat is either being supplied from an external heat releasing source such as an incinerator, a catalytic or chemical reactor, or a nuclear reactor, or supplied by the Joule heat generated by the electrolysis reactor itself, and can be valorised as useful heat in the endothermic steam conversion reaction.

A steam electrolyser cell basically consists of a gas-impermeable electrolyte, a porous steam-receiving electrode, and a counter-electrode which has opposite polarity. Depending on the type of ions that can traverse through the electrolyte, which in case of solid oxide cells can either be oxygen ions or protons, and promoted by the electrocatalytic activity of the electrodes for the associated electrochemical reactions, molecular hydrogen is formed either at the steam electrode or at the counter-electrode.

Solid oxide cells known today constitute substantial amounts of ceramic, and are therefore vulnerable to thermomechanical stress. To ensure the longevity of the electrolyser cell, it is therefore preferable to have a uniform temperature distribution. This is achieved by controlled heating (when the cell operates in endothermic mode), controlled cooling (cell in exothermic mode), or by imposing an electrical current across the cells such that heat required for the endothermic electrolysis reaction is supplied by Joule heat generated within the electrolyser cells due to their internal electrical resistance related to the transport of oxygen ions and electrons (i.e. the cell ohmic losses), activation polarizations and concentration polarizations. This operating point, where the electrolysis efficiency is 100%, is called the thermal-neutral voltage.

A well-known method to control the temperature of solid oxide electrolyser (SOE) cells, as specific example of a steam electrolyser, is by introducing air in the anode stream side and adjusting the air flow and air temperature at the counter electrode side (Chem. Eng. Trans., Vol. 61, 2017, p. 1069). Specific designs using air control have been described in patent application CA2626751A1, where air needed for the SOE stack is provided by a gas turbine, using incident heat to preheat the air, and where SOE exhaust air is recycled. Similarly, patent application EP2674515A1 suggests controlling the temperature by integrating a feedback loop from the stack exhaust to a heat exchanger and a thermal conditioning unit upstream the SOE stack. Alternatively, patent application US20100200422A1 proposes to use steam instead of air to control the SOE stack temperature. Patent application US20170279134A1 proposes to control the temperature of the SOE stack by integrating a heat exchanger in the interconnectors with separate conduits for a heat-transfer fluid. In all of these cases, the active heating and cooling adds to the system complexity.

Somewhat simpler is the concept proposed in US201690244890A1, where additional heat when the SOE stack is operated in endothermic mode is provided by redirecting part of the electric energy from the intermittent/fluctuating energy source to a resistive heater.

In addition, some patents exist that require dynamic operation, which in principle makes them attractive for operation with intermittent power. Patent US8231774B2 proposes to dissipate excess heat when the SOE stack is operated in exothermic mode, and to use that stored heat when the stack is operated in endothermic mode. More specifically, phase-change materials can be used for temperature control in dynamically operated SOE systems. Patent application US20140329161A1 suggests interposing plates in the SOE stack that include such material, while Dillig et al. suggests applying so-called heat-pipes (Fuel Cells, Vol. 14, 2014, p. 479). In all of these cases, it may satisfy temporary temperature excursions, but it may not be a solution if these excursions last too long. Therefore, frequent cycling between exothermic and endothermic mode is necessary, where it is not clear if this can be balanced with the intermittent, unpredictable nature of renewable power (e.g. wind, solar). EP 3 168 330 A1 describes a hydrogen production system where electric power is supplied in accordance with fluctuation of electric power supplied to an electrolysis cell, the system including a steam generator.

Patent application WO2007048997A3 describes a system including two solid-oxide electrolyser stacks, one operating at high efficiency at relatively high temperature, the other operating at lower temperature. If the operating conditions are such that the first stack is operated in endothermic mode (low current) at high temperature, thus requiring the input of thermal energy, this heat is provided by the second stack that, due to the higher internal resistance at the lower operating temperature, still will be operated in exothermic mode, even at the low electric current. The advantage is that for both stacks small thermal gradients can be realized, while temperature control in endothermic mode based on external heat supply can be suppressed or even avoided. A disadvantage is that the system relies on at least two stacks, with one stack (the one operating at lower temperature) operating at lower electrical efficiency.

Some patents disclose operation methods of SOE stacks at constant voltage. Patent application EP3221494A1 discloses methods to operate SOE or SOFC stacks in potentiostatic or galvanostatic mode. More specifically, patent US8163158 proposes to control the stack voltage close to the thermal-neutral voltage under varying electricity input by varying the steam concentration in a hydrogen-steam feed, while the total flow rate is preferably kept constant. The reactant concentration is increased when more electrical power is available, and is decreased when the available power is low. The patent further teaches that the hydrogen preferably comes from a recirculation loop, where more hydrogen gas needs to be recycled when electricity availability is low. This poses two drawbacks. First, a recirculation loop adds to the system complexity, and therefore makes the system more expensive and less easy to control. Secondly, recirculation of higher amounts of hydrogen, which requires more electric power, in order to maintain thermal-neutral voltage in times of low electricity availability results in an efficiency penalty.

It is therefore at least one objective of the present invention to overcome the drawbacks of the prior art. It is in particular an objective to provide a steam electrolyser system for the production of hydrogen that is less complex compared to those known in the prior art and which provides a simpler approach towards temperature control.

The objectives are solved by the subject-matter of the independent claims, preferred embodiments are described with regard to the dependent claims.

A first aspect of the invention relates to a steam electrolysis system for the production of hydrogen. The system may also be suitable for the production of oxygen and/or carbon monoxide and/or hydrogen. The system comprises at least one steam electrolyser cell, comprising a positive electrode, a negative electrode and a gas-impermeable electrolyte. The positive electrode is electrically connected to the negative electrode and the negative electrode is electrically connected to the positive electrode. The electrolyte is arranged between the positive electrode and the negative electrode. The system comprises at least one feeding gas arrangement, comprising at least one electric steam generator and at least one feeding gas supply route for supplying a flow of feeding gas comprising at least steam from the at least one feeding gas arrangement to the at least one steam electrolyser cell. The system also comprises at least one gas moving device for removing hydrogen from the at least one steam electrolyser cell and at least one external power supply source for operating the system. The at least one external power supply is electrically coupled to the at least one electric steam generator of the feeding gas arrangement and to the least one steam electrolyser cell. The at least one steam electrolyser cell and the at least one electric steam generator are electrically connected in parallel.

Due to the parallel arrangement of the at least one steam electrolyser cell and the at least one electric steam generator, both devices are able to independently adjust their operating point in a beneficial way without additional control, thus providing a simple and reliable system without the need of further controlling elements.

The system can comprise an auxiliary gas heater which can be arranged in parallel to the at least one steam electrolyser cell and the at least one electric steam generator. The auxiliary gas heater can be an air pre-heater.

Such an arrangement is of particular advantage where a high temperature steam electrolyser is operated with air that is electrically heated.

The at least one steam electrolyser cell can be a solid-oxide electrolyser cell or a reversible solid-oxide cell (rSOC). An rSOC can operate as a solid-oxide electrolyser (SOE) or as a solid-oxide fuel cell (SOFC). In a broader sense, the at least one steam electrolyser cell can be a ceramic-oxide electrolyser cell, phosphorous acid electrolyser cell or a molten carbonate electrolyser cell.

The at least one gas moving device can be arranged upstream or downstream of the electrolyser. The gas moving device, for example a blower, allows extraction of the product gas from the cell by creating over-pressure upstream the electrolyser, or under-pressure downstream the electrolyser.

The system can also comprise more than one gas moving device, for example one for each electrode.

The electrolyser system can also comprise a gas separation device as described in more detail further below.

Due to manufacturing limitations, the size of one cell can be restricted and therefore the system with more than one steam electrolyser cell per repeat element is preferred. The cells can be arranged in stacks, preferably single flat-plate cells are put into series in stacks or assemblies. The stack may comprise 10-200, preferably 50 to 100 repeat elements.

The stack arrangement allows a large-scale production of hydrogen. In case of a stack arrangement, the at least one electric steam generator is preferably electrically connected in parallel with the stack arrangement.

The gas-impermeable electrolyte can be an oxygen ion conducting electrolyte.

In case of an oxygen ion conducting electrolyte, the hydrogen-producing electrode generates hydrogen by stripping oxygen ions from the steam that is fed to this electrode. This oxygen stripping requires the presence of electrons, so the hydrogen producing electrode is the cathode. These oxygen ions then traverse through the electrolyte and finally arrive at the counter-electrode. In case this counter-electrode is not fed with a gas, oxygen gas will be formed that has to be extracted from the reactor, for example by the gas moving device. In other cases a sweep gas will be used to remove the oxygen gas. This sweep gas is a gas that does not react with the oxygen gas, and could for example be air or another inert gas such as nitrogen. The counter-electrode could also be fed with one or more reactants that react with the oxygen ions. Instead of feeding the hydrogen forming electrode with pure steam, other compounds such as carbon dioxide can be fed to the hydrogen forming electrode as well, where oxygen ions will also be stripped from these molecules. In the case of CO₂ this would typically result in carbon monoxide.

The electrolyte can be a proton conducting electrolyte.

In case of a proton conducting electrolyte, steam is fed to the counter-electrode side. Protons are stripped from the steam, which generates electrons. These protons then traverse through the electrolyte. Upon arriving at the hydrogen forming electrode, the protons recombine to hydrogen gas with the help of electrons, that either has to be extracted from the reactor or can be removed by means of a sweep gas that does not react with the hydrogen. Instead of feeding the counter-electrode with steam, other compounds that can act as proton donor can be co-fed as well. In all cases, the hydrogen-generating electrode is the cathode, but in the case of oxygen ion conducting electrolyte the steam (and other oxygen-ion donating gases) will be fed to the cathode, while in the case of proton conducting electrolyte, the steam (and other proton-donating gases) will be fed to the anode.

An oxygen-ion-conducting electrolyte can comprise zirconia- and ceria-based materials. Preferably, the electrolyte has a fluorite-type crystal structure, MX₂ being the predominant crystal type. It contains a cubic unit cell with cations occupying the face-centred positions and anions at the tetrahedral sites. The cubic structure can be stabilised at room temperature by introducing acceptor-based cations into the lattice, thereby introducing oxygen vacancies. Dopant cations can be yttrium (Y³⁺), erbium (Er³⁺), gadolinium (Gd³⁺), europium (Eu³⁺), dysprosium (Dy³⁺), scandium (Sc³⁺), calcium (Ca²⁺), ytterbium (Yb³⁺) and magnesium (Mg²⁺). Yttria-stabilised electrolyte is preferred since it can operate within high temperature ranges like 600 - 1000 °C. Doping can be in the range of 5 to 10 mol %, preferably 8 mol % and in particular preferred for yttria doped zirconia.

Advantageously, Nickel (Ni)-based composites with yttria (Y₂O₃)-stabilised zirconia (ZrO₂) (YSZ) and yttrium (Y)-doped barium cerate zirconate (BCZY), known for oxygen ion and proton conduction, are used as hydrogen electrodes. They are less cost intense compared to platinum, show reasonable electrochemical activity, chemical stability and matching thermal expansion coefficient with the other components of the cell.

A proton-conducting-electrolyte is preferably a perovskite-type based oxide with the preferred formula of ABO₃, where A sites are typically occupied by larger cations than B sites and analogous in size to the O-site anions. The A site can be occupied by an alkaline earth element such as barium, strontium or calcium. The B site can be occupied by a tetravalent element such as zirconium or cerium. The compounds can be doped with trivalent elements to enhance protonic conductivity, such as yttrium, neodymium, samarium, ytterbium, indium, europium and gadolinium.

The counter-electrode can be an air electrode, transporting oxygen ions/electrons. The air electrode can be composites of perovskite materials, such as strontium (Sr)-doped lanthanum manganite (LSM), strontium-doped lanthanum cobaltite (LSC), or strontium-doped lanthanum cobalt ferrite (LSCF), with oxygen-ion or proton-conducting materials, such as yttria (Y₂O₃)-stabilised zirconia (ZrO₂) (YSZ), gadolinia(Gd)-doped ceria (GDC), and yttrium (Y)-doped barium cerate zirconate (BCZY).

Advantageously, the at least one electric steam generator is an electric steam boiler or an electrode steam boiler.

Typically, the term electric steam boiler can be used for steam generators that rely on sending electric power through a resistive wire, while the term electrode steam boiler can be used for steam generators that rely on sending electric power through the water itself by means of a positive and a negative electrode immersed in the water. The steam boiler can potentially accumulate steam produced in excess to the steam required by the process.

The properties of the at least one steam electrolyser cell combined with the resistive properties of the at least one electric steam boiler or electrode steam boiler allow a simple a reliable system for operating the system without additional control.

The system can comprise at least one gas separation device for the separation and/or purification of different product gases. The at least one gas separation device can be based on any of the known gas separation techniques. For example, techniques for separation of gases include adsorption and/or absorption techniques. The techniques may involve temperature (e.g. temperature swing adsorption) or pressure cycling (e.g. pressure swing adsorption). The technique may be used to remove gaseous compounds or to reuse the adsorbent or absorbent. It may also be suitable to remove gaseous contaminants such as traces of undesired gases from a gas stream where the adsorbent/absorbent is disposed of when saturated.

The at least one gas separation device may also comprise a cryogenic separation element in which one of the compounds in a mixture of gaseous compounds experiences a phase change while the remaining compounds stay in their gaseous phase, for example a condenser.

Further, the at least one gas separation device may also comprise a concentration driven or electrically driven membrane that permits passage of one gas compound, either in gaseous state or as ions that are incorporated in the membrane material, while the other gas compounds cannot cross the membrane. The system can comprise more than one gas separation device, preferably two and preferably one for each electrode site.

The at least one gas separation device has the advantage of separating product gas from non-reacted feeding gas, allowing recirculation of the non-reacted feeding gas to the system and thus making the feeding gas consumption more efficient. Further, the device allows purification of the product gases.

Further, the system can comprise at least one steam condenser in fluid connection with the at least one electrolyser cell, preferably by means of at least one gas separation device. The steam condenser can be an additional part of the gas separation device or can be the gas separation device itself. For example, the steam condenser can be an efficient way to separate converted gas from non-converted steam, allowing the steam to be condensed and reverted to the electric steam generator. The heat recovered from the steam condensation is usable for heating water that is fed to the electric steam generator, thus lowering the electrical demand of the electric steam generator.

Advantageously, the at least one feeding gas arrangement comprises a co-feeding gas-supply. The co-feeding gas supply may provide co-gas for the reaction and/or auxiliary gas for maintenance of the system. For example, auxiliary gas like hydrogen or any other reducing gas can be added for maintenance of the respective electrode, since it may help to prevent oxidation of the electrode.

The auxiliary gas or co-gas can be a pure gas or a mixture of gases. The gas supply can be connected or connectable to one or more gas sources. A gas source can be: a gas bottle filled with a reactant gas or reactant gas mixture; a reactor for a chemical reaction, wherein the gas is produced through a chemical reaction; a gas station, or gas tank.

In general, the system according to the invention can be used to produce fuels like hydrogen (H₂), methane (CH₄), methanol (CH₃OH), dimethyl ether (CH₃-O-CH₃) or other fuels and/or ammonia (NH₃) based on electrolysis. The conversion depends on the initial gases used and working mode of the cell. In SOE-mode, for example, hydrogen (H₂) can be produced from water (H₂O) and carbon monoxide (CO) from carbon dioxide (CO₂).

Advantageously, the power of the power supply source is fluctuating power. Fluctuating power may result if natural sources such as wind or sun are used for power generation. However, in conventional SOE systems, operation with fluctuating power requires additional control to prevent thermal runaway of the SOEs. Due to the arrangement of the present invention, in particular the parallel connectivity of the at least one electrolyser cell and the at least one electric steam generator, no additional control is required and the system can be safely operated with fluctuating power. Thus, renewable power generating resources can be used to operate the system.

A nominally available power share between the at least one electric steam generator and the at least one steam electrolyser cell can be in the range of 10:90 to 50:50, preferably 17:83. The exact power share between electrolysis (EL), steam generation (Ev) and auxiliary gas heater (Aux. Heat) can depend on the chosen nominal operating point.

For example, the following table gives three examples corresponding to 60 %, 70% and 80% steam conversion (SC). In the calculations, it was assumed that the SOE was operated in isothermal conditions, that the heat exchange network approach temperature was 100°C and that steam was delivered at 120°C. Those conditions are chosen to be slightly above the point where the SOE is at thermal-neutral voltage, which is considered to be beneficial for minimizing thermal gradients across the electrochemical cells, in order to compensate for thermal losses that unavoidably exist in electrochemical reactors. In this case auxiliary heating is used to bring the system to the operating temperature and to keep the heat balance.

**Table I. Examples of preferred power shares between the steam electrolyzer (EL) and electric steam boiler (Ev).**

| SC | EL (kW) | Aux. Heat (kW, dT=100°C) | Ev (120°C, kW) | Total (kW) | EL (in %) | Aux. Heat (in %, dT = 100°C) | Ev (in %, 120°C) | Total (in %) |
|---|---|---|---|---|---|---|---|---|
| 60 % | 247 | 15 | 67 | 329 | 75.1 | 4.6 | 20.4 | 100.0 |
| 70% | 247 | 14 | 57 | 318 | 77.7 | 4.4 | 17.9 | 100.0 |
| 80% | 247 | 13 | 50 | 310 | 79.7 | 4.2 | 16.1 | 100.0 |

Additionally, the system can comprise a supervising device. The supervising device can comprise elements that allow monitoring of the system. It may comprise sensors for controlling or monitoring voltage or temperature, for controlling the feeding gas supply or the exhaust gas. It may contain blowers to move gas through the system. It may contain electronic elements to allow remote control. It may comprise computing systems.

Preferably, the supervising device is electrically connected or connectable to a non-fluctuating power source. The supervising device should preferably be prioritized with regard to power supply to secure optimal working conditions. The power can be provided from an electric utility or back-up power. This allows operation if fluctuating power is temporarily not available and also allows for keeping the system in stand-by mode.

The system may further comprise power limiters, preferably arranged in the at least one electric steam generator. These power limiters can additionally prevent overheating and thus avoids failure of the system. In particular, overloading of the system can be avoided which may damage the equipment. The power limiters can be installed in the electric steam generator and/or the solid-oxide electrolyser, typically with power limiting techniques such as filled-forward, constant current source or a fold-back characteristic. The power limiters do by no means restrict the invention since the power between the power limiters and the electric steam generator and/or steam electrolyser cell may adjust independently or freely, respectively.

Advantageously, the at least one steam electrolyser cell is operable or operated at thermal-neutral conditions. The arrangement can provide an operation of the at least one electrolyser cell at a fixed potential. The lower voltage limit, where potentiostatic operation is possible is related to the Nernst-potential, while the upper limit depends on what the materials used in the electrolyser cell can withstand. The best way is to operate the electrolyser cell at or around the thermal-neutral voltage, in order to balance heat consumption of the electrolytic reaction with Joule heat generated by the internal resistance of the electrolyser and the electric power that goes through it.

The term "thermal-neutral" refers to operating conditions in which the heat produced in the electrolyser due to internal electrical losses equals the heat needed for the splitting of the steam. It usually refers to a cell voltage defined by dH/2F, where dH is the molar enthalpy of the water splitting reaction and F is Faraday's constant. The cell voltage for the co-electrolysis of CO₂ and H₂O in one gas mixture is usually in the range of 1.2 - 1.5 V.

Further, the system can comprise a recycling system for recirculation of non-converted feeding gas. The recycling system can comprise a condenser as previously described. The recycling system can be connected or is connectable to the at least one gas separation device, the gas separation device as previously described. The recycling system can also be part of the co-feeding system in which non-converted gas is re-fed to the system.

The system can further comprise an additional auxiliary water heater for pre-heating or evaporation of water. Preferably, the heat may result from internal heat recovery. An auxiliary heat source can serve as a back-up in case of any failure ensuring stabile working conditions.

A second aspect of the invention refers to a method of operating a steam electrolysis system. The method comprises the steps of:
- providing a steam electrolysis system as previously described,
- applying power to the steam electrolysis system and the at least one electric steam generator of the at least one feeding gas arrangement,
- imposing a voltage across the at least one steam electrolyser cell,
- supplying feeding gas comprising at least steam from the at least one feeding gas arrangement to one of the electrodes of the at least one steam electrolyser cell,
- allowing at least partial consumption of the feeding gas in the at least one steam electrolyser cell to produce hydrogen,
- extracting hydrogen from the at least one electrolyser cell.

The step of imposing a voltage across the at least one electrolyser cell can occur before or after suppling feeding gas, but before supplying feeding gas is preferred. The voltage is preferably kept upon removing the feeding gas. The voltage can be in the range of 1.2 to 1.5 V per stack repeating element. The at least one steam electrolyser cell can be of a type as previously described.

The method allows the following operation when the least one electrolyser cell and the at least one electric steam generator are electrically connected in parallel:
Initially, the at least one steam electrolyser cell, for example the solid-oxide electrolyser (SOE) cell, receives no steam and thus its internal resistance is high. Consequently, no electric current will flow through it but is provided to the at least one electric steam generator. The at least one electric steam generator starts to produce steam at full power, which is then fed to the at least one electrolyser cell. This causes the internal resistance of the electrolyser cell to drop and thus current to flow through the electrolyser cell.

Due to the power consumption in the electrolyser cell, less electric power is available for the at least one electric steam generator. Therefore, less steam will be produced and fed to the electrolyser cell than was initially the case. As less steam gets available in the electrolyser cell, its internal resistance increases which causes reduction in the current flow through the electrolyser cell, and leaves more power to be fed to the at least one electric steam generator. This cycle repeats until the at least one electric steam generator and the at least one electrolyser cell have balanced out the amount of power that each of them need to receive. Thus, the system can regulate itself and does not need any additional control.

The feeding gas can comprise additional gas or gas mixtures as previously described.

The system is advantageously operated with fluctuating electric power. Thus, allowing the use of renewable power sources which may be less stable in providing power than conventional method such as from a nuclear power plant.
10 % to 50 % of the nominally available electric power can be supplied to the at least one electric steam generator and 50 % to 90 % of the nominally available electrical power can be supplied to the at least one steam electrolyser cell.

The electrical operation of the supervising devise is preferably prioritized to allow full control of the system.

The at least one steam electrolyser cell can be operated at thermal-neutral conditions as previously described.

Advantageously, non-converted feeding gas is recycled by recirculation to the at least one electrolyser cell to avoid loss of non-converted gas and to allow efficient working of the system.

In the light of the invention, it should be recognized that the resistive properties of the electrolyser cell are not constant but depend on the operating conditions of the system such as operating temperature, current density, steam utilization and the like.

For further illustration of the invention, the following figures are presented and are not to be understood as limiting. It shows:
- Figure 1:: the connectivity of a basic steam electrolyser system
- Figure 2:: the parallel connectivity of the steam electrolyser cell and the electric steam generator.
- Figure 3:: the parallel connectivity of the steam electrolyser cell and the electric steam generator with adjustable resistance.
- Figure 4:: SOE area specific resistance as a function of the steam flow.
- Figure 5:: ASR as a function of SOE current density for a steam feed flow of 2, 4, 8 or 12 Nml/min.cm²
- Figure 6:: the distribution of the available electrical power between the electric steam generator and the electrolyser cell.
- Figure 7:: the distribution of the available electrical power between the electric steam generator and the electrolyser cell and an auxiliary heating.
- Figure 8:: time evolution of the power share of the electric steam generator and electrolyser cell.

Same reference signs refer to same elements of the invention.

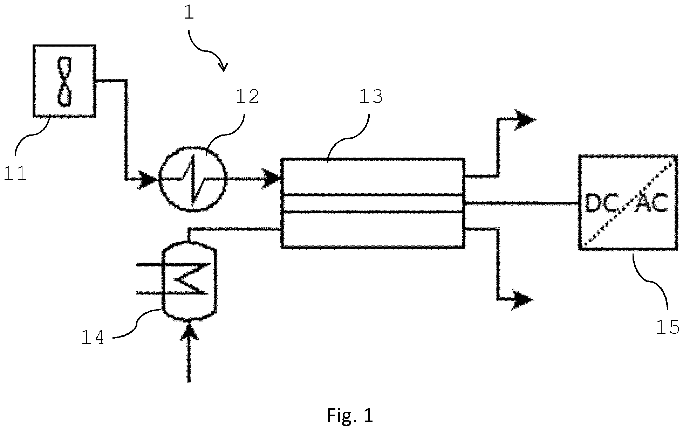

Figure 1 shows the stream connectivity of a basic steam electrolyser system 1. The system comprises a blower 11 to feed air to the counter electrode and that creates over-pressure upstream the electrolyser, an auxiliary heat source 12 to preheat air, a steam electrolyser cell in form of a solid-oxide electrolyser cell 13 that receives DC current from the AC-DC converter, an electric steam generator 14 and a AC-DC converter 15, which would be needed in case the system receives AC power.

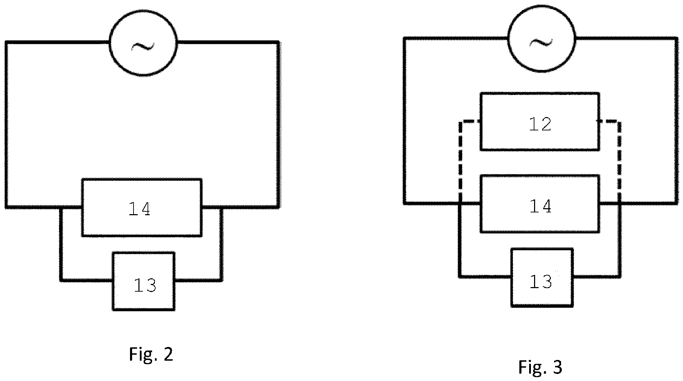

Figure 2 shows the parallel electrical connectivity of the electric steam generator 14 and the solid-oxide electrolyser cell 13. The fluctuating power is indicated by the wave enclosed by the circle.

In Figure 3, an arrangement is shown where also the auxiliary heat source 12 to preheat air is arranged in parallel to the electrolyser cell 13 and the electric steam generator 14. This could be a likely arrangement where a high temperature steam electrolyser is operated with air that is electrically heated. The fluctuating power is indicated by the wave enclosed by the circle. The fluctuating power can either be AC current, which for example could come from the grid, from wind power, or from hydropower, or solar-thermal, or DC current, for example from PV. The electrolyser operates at fixed DC voltage, for example 400 V. In the case of an AC power source, an AC-DC converter (not shown) may produce the required fixed DC-voltage for the electrolyser, e.g. 100 V. In addition, AC-DC or DC-DC conversion (not shown) may be deployed for the steam generator and/or the electric air preheater. The electrolyser cell,the steam generator and the auxiliary air preheater can operate at fixed voltage but the power fluctuation can result in fluctuating current.

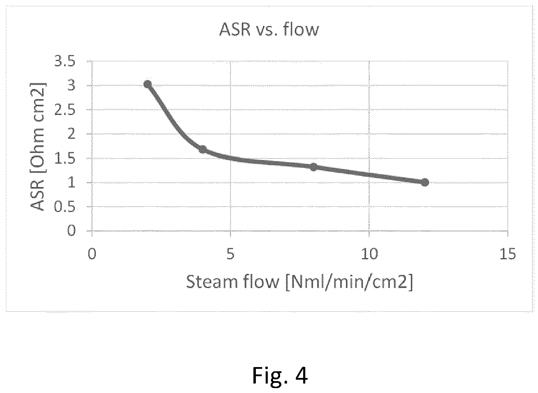

Figure 4 shows how the total internal resistance of the electrolyser cell (expressed as area specific resistance ASR) can depend on the supplied steam flow. It can be observed that the ASR generally drops as the steam flow increases.

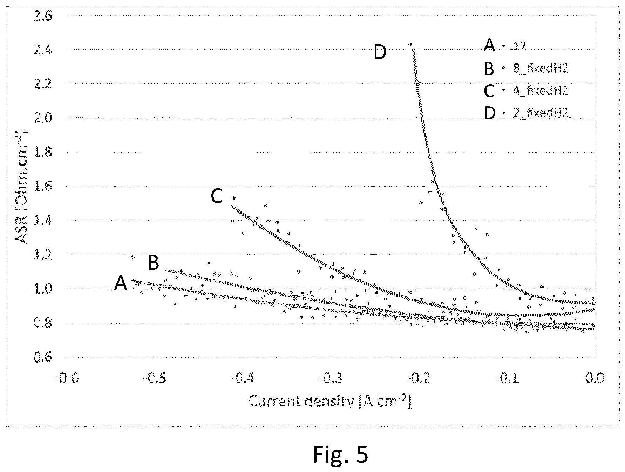

In Figure 5 shows how the total internal resistance of the eletrolyser cell (expressed as ASR) can depend on the current density. ASR as a function of SOE current density is provided for a steam feed flow of 2 (D), 4 (C), 8 (B) and 12 (A) Nml.min⁻¹.cm⁻². It can be observed that the ASR generally increases with current density. In Figure 5, a constant flow of hydrogen was added to the steam feed flow in order to maintain the steam electrode.

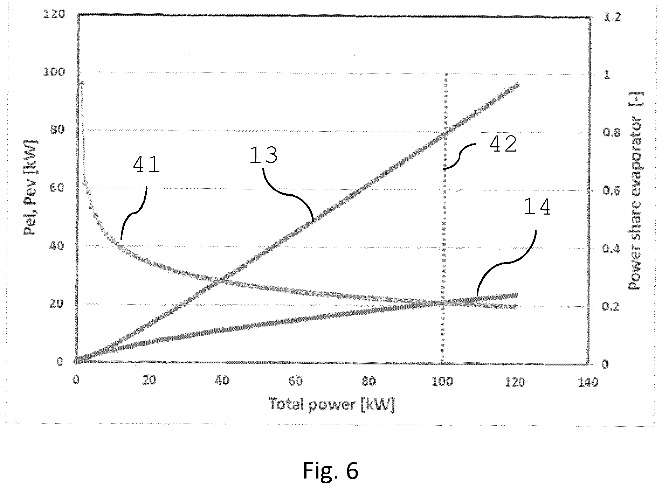

Figure 6 shows the distribution of the available electrical power between the electric steam generator 14 and the electrolyser cell 13. Curve 41 indicates the electrical power of the electric steam generator divided by the total electrical power (Pₑᵥ/Pₜₒₜ). The nominal power line is indicated with 42. For the calculations of this graph and the next graphs 7 to 8, data were used from Figure 4, which shows how the ASR of the electrolyser cell changes with its operating conditions.

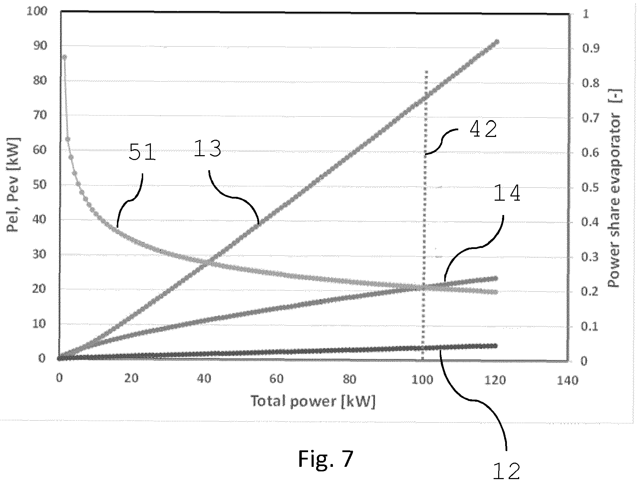

Figure 7 shows the distribution of the available electrical power between the electric steam generator 14 and the electrolyser cell 13 and an auxiliary electrical heating 12, which is an electrical air preheater in parallel arrangement with the electrolyser and the steam generator (see Figure 3). Curve 51 indicates the electrical power of the electric steam generator divided by the total electrical power (Pₑᵥ/Pₜₒₜ) and is different from curve 41.

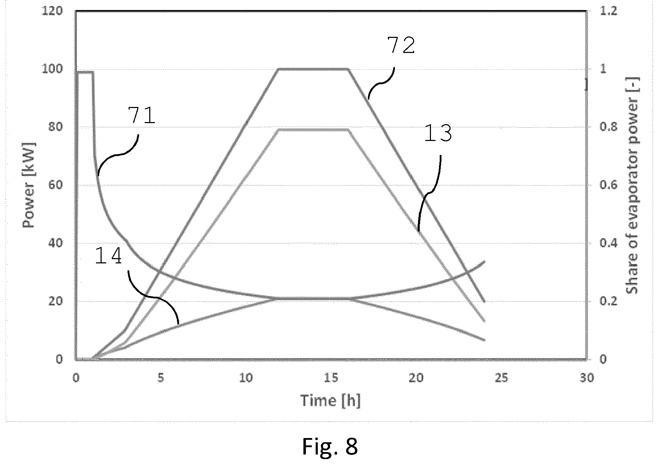

Figure 8 shows an example of the time evolution of the power share of the electric steam generator 14 and the electrolyser cell 13 with a given time variation of power. Curve 71 indicates the electrical power of the electric steam generator divided by the total electrical power (Pₑᵥ/Pₜₒₜ). Curve 72 indicates the total power.

Interpreting curve 71: At lower power, the electric steam generator is favoured because at low steam flow, the initial resistance of the electrolyser cell is high. At nominal power, the power share settles at 20 % for the electric steam generator and 80 % for the electrolyser cell as the internal resistance of the electrolyser cell decreases with steam flow. Although the time variation of power is shown in a simple way in this graph, the same operation principle will apply for fluctuating power from renewable sources.

## Claims

1. Steam electrolysis system for the production of hydrogen, the system comprising:
- at least one steam electrolyser cell comprising a positive electrode, a negative electrode and a gas-impermeable electrolyte, wherein the positive electrode is electrically connected to the negative electrode and the negative electrode is electrically connected to the positive electrode and wherein the electrolyte is arranged between the positive electrode and the negative electrode,
- at least one feeding gas arrangement comprising at least one electric steam generator
- at least one feeding gas supply route for supplying a flow of feeding gas comprising at least steam from the at least one feeding gas arrangement to the at least one steam electrolyser cell,
- at least one gas moving device for removing hydrogen from the at least one steam electrolyser cell, and
- at least one external power supply source for operating the system,
wherein the at least one external power supply is electrically coupled to the at least one electric steam generator of the feeding gas arrangement and to the least one steam electrolyser cell, **characterized in that** the at least one steam electrolyser cell and the at least one electric steam generator are electrically connected in parallel.

2. System according to claim 1, wherein an auxiliary gas heater is arranged in parallel to the at least one steam electrolyser cell and the at least one electric steam generator.

3. System according to one of the previous claims, wherein the at least one electric steam generator is an electric steam boiler or an electrode steam boiler.

4. System according to one of the previous claims, wherein the system comprises at least one gas separation device for the separation and/or purification of different product gases.

5. System according to one of the previous claims, wherein the system comprises at least one steam condenser in fluid connection with the at least one steam electrolyser cell.

6. System according to one of the previous claims, wherein the at least one feeding gas arrangement comprises a co-feeding gas-supply.

7. System according to one of the previous claims, wherein power of the power supply source is fluctuating power.

8. System according to one of the previous claims wherein the system comprises a supervising device.

9. System according to claim 8, wherein the supervising device is electrically connected or connectable to a non-fluctuating power source.

10. System according to one of the previous claims, wherein the system comprises a recycling system for recirculation of non-converted feeding gas.

11. System according to one of the previous claims, wherein the system further comprises an auxiliary water heater for pre-heating or evaporation of water.

12. Method of operating a steam electrolysis system, comprising the steps of
- Providing a steam electrolysis system according to claim 1 to 11,
- applying power to the steam electrolysis system and the at least one electric steam generator of the at least one feeding gas arrangement,
- imposing a voltage across the at least one steam electrolyser cell,
- supplying feeding gas comprising at least steam from the at least one feeding gas arrangement to one of the electrodes of the at least one steam electrolyser cell,
- Allowing at least partial consumption of the feeding gas in the at least one steam electrolyser cell to produce hydrogen,
- extracting hydrogen from the at least one steam electrolyser cell.

13. Method according to claim 12, wherein the system is operated with fluctuating electric power.

14. Method according to one of claims 12 to 13, wherein the at least one steam electrolyser cell is operated at thermal-neutral conditions.

15. Method according to one of claims 12 to 14, wherein non-converted feeding gas is recycled by recirculation to the at least one steam electrolyser cell.

## Patentansprüche

1. Dampf-Elektrolyse-System für die Herstellung von Wasserstoff, wobei das System umfasst:
- mindestens eine Dampf-Elektrolysezelle mit einer positiven Elektrode, einer negativen Elektrode und einem gasundurchlässigen Elektrolyten, wobei die positive Elektrode elektrisch mit der negativen Elektrode und die negative Elektrode elektrisch mit der positiven Elektrode verbunden ist und wobei der Elektrolyt zwischen der positiven Elektrode und der negativen Elektrode angeordnet ist,
- mindestens eine Speisegasanordnung mit mindestens einem elektrischen Dampferzeuger,
- mindestens einen Speisegaszuführungsweg zum Zuführen eines Speisegasstroms, der mindestens Dampf enthält, von der mindestens einen Speisegasanordnung zu der mindestens einen Dampf-Elektrolysezelle,
- mindestens eine Gasbewegungsvorrichtung zur Entnahme von Wasserstoff aus der mindestens einen Dampf-Elektrolysezelle, und
- mindestens eine externe Stromversorgung für den Betrieb des Systems,
wobei die mindestens eine externe Stromversorgung mit dem mindestens einen elektrischen Dampferzeuger der Speisegasanordnung und mit der mindestens einen Dampf-Elektrolysezelle elektrisch gekoppelt ist, **dadurch gekennzeichnet, dass** die mindestens eine Dampf-Elektrolysezelle und der mindestens eine elektrische Dampferzeuger elektrisch parallel geschaltet sind.

2. System nach Anspruch 1, wobei parallel zu der mindestens einen Dampf-Elektrolysezelle und dem mindestens einen elektrischen Dampferzeuger ein Gas-Zusatzheizgerät angeordnet ist.

3. System nach einem der vorhergehenden Ansprüche, wobei der mindestens eine elektrische Dampferzeuger ein Elektrodampfkessel oder ein Elektrodendampfkessel ist.

4. System nach einem der vorhergehenden Ansprüche, wobei das System mindestens eine Gastrenneinrichtung zur Trennung und/oder Reinigung verschiedener Produktgase umfasst.

5. System nach einem der vorhergehenden Ansprüche, wobei das System mindestens einen Dampfkondensator in Fluidverbindung mit der mindestens einen Dampf-Elektrolysezelle umfasst.

6. System nach einem der vorhergehenden Ansprüche, wobei die mindestens eine Speisegasanordnung eine mitspeisende Gaszufuhr umfasst.

7. System nach einem der vorhergehenden Ansprüche, wobei die Leistung der Stromversorgungsquelle schwankende Leistung ist.

8. System nach einem der vorhergehenden Ansprüche, wobei das System eine Überwachungseinrichtung umfasst.

9. System nach Anspruch 8, wobei die Überwachungseinrichtung elektrisch mit einer nicht schwankenden Stromquelle verbunden oder verbindbar ist.

10. System nach einem der vorhergehenden Ansprüche, wobei das System ein Recyclingsystem zur Rückführung von nicht umgewandeltem Speisegas umfasst.

11. System nach einem der vorhergehenden Ansprüche, wobei das System ferner einen zusätzlichen Wassererhitzer zum Vorheizen oder Verdampfen von Wasser umfasst.

12. Verfahren zum Betrieb eines Dampf-Elektrolyse-Systems, das die folgenden Schritte umfasst
- Bereitstellung eines Dampf-Elektrolyse-Systems nach einem der Ansprüche 1 bis 11,
- Einspeisung von Strom in das Dampfelektrolysesystem und den mindestens einen elektrischen Dampferzeuger der mindestens einen Speisegasanlage,
- Anlegen einer Spannung an die mindestens eine Dampf-Elektrolysezelle,
- Zuführen von Speisegas, das mindestens Dampf enthält, von der mindestens einen Speisegasanordnung zu einer der Elektroden der mindestens einen Dampf-Elektrolysezelle,
- Ermöglichung eines zumindest teilweisen Verbrauchs des Speisegases in der mindestens einen Dampf-Elektrolysezelle zur Erzeugung von Wasserstoff,
- Extraktion von Wasserstoff aus der mindestens einen Dampf-Elektrolysezelle.

13. Verfahren nach Anspruch 12, wobei das System mit schwankender elektrischer Leistung betrieben wird.

14. Verfahren nach einem der Ansprüche 12 bis 13, wobei die mindestens eine Dampf-Elektrolysezelle unter thermisch neutralen Bedingungen betrieben wird.

15. Verfahren nach einem der Ansprüche 12 bis 14, wobei nicht umgewandeltes Speisegas durch Rückführung in die mindestens eine Dampf-Elektrolysezelle rezykliert wird.

## Revendications

1. Système d'électrolyse à vapeur pour la production d'hydrogène, le système comprenant :
- au moins une cellule d'électrolyseur à vapeur comprenant une électrode positive, une électrode négative et un électrolyte imperméable aux gaz, dans laquelle l'électrode positive est connectée électriquement à l'électrode négative et l'électrode négative est connectée électriquement à l'électrode positive et dans laquelle l'électrolyte est disposé entre l'électrode positive et l'électrode négative,
- au moins un dispositif d'alimentation en gaz comprenant au moins un générateur de vapeur électrique,
- au moins une voie d'alimentation en gaz pour fournir un flux de gaz d'alimentation comprenant au moins de la vapeur depuis l'au moins un dispositif d'alimentation en gaz vers l'au moins une cellule d'électrolyse à vapeur,
- au moins un dispositif de déplacement de gaz pour extraire l'hydrogène de la cellule d'électrolyse à vapeur, et
- au moins une source d'alimentation externe pour le fonctionnement du système,
dans lequel l'au moins une source d'alimentation externe est couplée électriquement à l'au moins un générateur de vapeur électrique du dispositif d'alimentation en gaz et l'au moins une cellule d'électrolyse à vapeur, **caractérisé par le fait que** l'au moins une cellule d'électrolyse à vapeur et l'au moins un générateur de vapeur électrique sont connectés électriquement en parallèle.

2. Système selon la revendication 1, dans lequel un réchauffeur de gaz auxiliaire est disposé en parallèle avec l'au moins une cellule d'électrolyseur à vapeur et l'au moins un générateur de vapeur électrique.

3. Système selon l'une des revendications précédentes, dans lequel l'au moins un générateur de vapeur électrique est une chaudière à vapeur électrique ou une chaudière à vapeur à électrodes.

4. Système selon l'une des revendications précédentes, dans lequel le système comprend au moins un dispositif de séparation des gaz pour la séparation et/ou la purification de différents gaz produits.

5. Système selon l'une des revendications précédentes, dans lequel le système comprend au moins un condenseur de vapeur en liaison fluidique avec l'au moins une cellule d'électrolyseur à vapeur.

6. Système selon l'une des revendications précédentes, dans lequel l'au moins un dispositif d'alimentation en gaz comprend une alimentation en gaz co-alimentée.

7. Système selon l'une des revendications précédentes, dans lequel l'énergie de la source d'alimentation est une énergie fluctuante.

8. Système selon l'une des revendications précédentes dans lequel le système comprend un dispositif de surveillance.

9. Système selon la revendication 8, dans lequel le dispositif de surveillance est connecté électriquement ou connectable à une source d'énergie non fluctuante.

10. Système selon l'une des revendications précédentes, dans lequel le système comprend un système de recyclage pour la recirculation du gaz d'alimentation non converti.

11. Système selon l'une des revendications précédentes, dans lequel le système comprend en outre un chauffe-eau auxiliaire pour le préchauffage ou l'évaporation de l'eau.

12. Méthode d'exploitation d'un système d'électrolyse à vapeur, comprenant les étapes suivantes
- Fournir un système d'électrolyse à vapeur selon les revendications 1 à 11,
- Alimenter le système d'électrolyse à vapeur et l'au moins un générateur à vapeur électrique de l'au moins un dispositif d'alimentation en gaz,
- imposer une tension à la cellule de l'électrolyseur à vapeur,
- fournir un gaz d'alimentation comprenant au moins de la vapeur à partir d'au moins un dispositif d'alimentation en gaz à l'une des électrodes de l'au moins une cellule d'électrolyse à vapeur,
- Permettre la consommation au moins partielle du gaz d'alimentation dans l'au moins une cellule d'électrolyse à vapeur pour produire de l'hydrogène,
- extraire de l'hydrogène de l'au moins une cellule d'électrolyse à vapeur.

13. Méthode selon la revendication 12, dans laquelle le système fonctionne avec une énergie électrique fluctuante.

14. Méthode selon l'une des revendications 12 à 13, dans laquelle l'au moins une cellule d'électrolyse à vapeur est exploitée dans des conditions de neutralité thermique.

15. Procédé selon l'une des revendications 12 à 14, dans lequel le gaz d'alimentation non converti est recyclé par recirculation dans l'au moins une cellule d'électrolyse à vapeur.
